Europäisches Patentamt

(19) European Patent Office

Office européen des brevets

(11) Numéro de publication: **0 143 771**
**B1**

## FASCICULE DE BREVET EUROPÉEN ⑫

(51) Int. Cl.⁴: **B 23 D 33/02 //**
**B23D33/10**

(45) Date de publication du fascicule du brevet:
15.02.89

(21) Numéro de dépôt: 84870147.0

(22) Date de dépôt: 24.10.84

(54) Chenal-guide d'une machine à découper des baguettes de fil métallique.

(30) Priorité: 27.10.83 LU 85065

(43) Date de publication de la demande:
05.06.85 Bulletin 85/23

(45) Mention de la délivrance du brevet:
15.02.89 Bulletin 89/7

(84) Etats contractants désignés:
AT BE CH DE FR GB IT LI NL SE

(56) Documents cité:
CH-A-489 309
FR-A-601 824
FR-A-1 364 031
FR-A-2 249 735
US-A-3 272 501

(73) Titulaire: **Decoux, Pierre, 6, Grand'Place, B-5950
Orp- Jauche (BE)**

(72) Inventeur: **Decoux, Pierre, 6, Grand'Place, B-5950
Orp- Jauche (BE)**

(74) Mandataire: **De Palmenaer, Roger, Bureau Vander
Haeghen 63, avenue de la Toison d'Or, B-1060
Bruxelles (BE)**

LIBER, STOCKHOLM 1989

## Description

L'invention est relative à un chenal-guide présentant une rainure longitudinale à fond éclipsable et constituant un élément d'une machine destinée à découper des baguettes de fil métallique de longueur prédéterminée et précise, à partir d'une source débitant du fil dressé ou droit, ce chenal-guide étant placé en aval d'une cisaille constituée d'une lame fixe et d'une lame mobile et présentant à son extrémité aval une butée, dont la distance par rapport à la cisaille avant et au début de l'action de cette cisaille détermine la longueur des baguettes.

Les termes "fil métallique", tels qu'ils sont utilisés dans le présent mémoire, désignent un fil en un métal quelconque, par exemple en acier, présentant une section de dimension et de forme quelconques, par exemple une section circulaire ou crénelée, ce fil pouvant éventuellement être entouré d'une gaine qui peut être non métallique, par exemple d'une gaine en matière plastique.

On connaît, par le document FR-A-2 249 735, un dispositif destiné à couper des tronçons de fil à une longueur déterminée. Ce dispositif comprend une meule qui coupe le fil maintenu entre deux mâchoires. Les tronçons de fil découpés sont recueillis dans une goulotte dont la partie inférieure peut s'ouvrir à la demande et dont l'extrémité opposée de celle voisine de la meule comporte une butée. Cette butée ferme les mâchoires, puis actionne la meule et enfin ouvre ladite partie inférieure.

On connaît également, par le document FR-A-1 364 031, un mécanisme de coupe rotative dans lequel une nappe continue, par exemple en papier ou carton, passe entre des galets, puis sur une arête d'un couteau fixe. Ce couteau fixe coopère avec un couteau rotatif et la nappe coupée tombe sur une table de réception.

Dans des machines automatiques connues à couper le fil droit à longueur précise, le fil est introduit dans un chenal-guide à l'entrée duquel se trouve une cisaille constituée par une lame fixe ou buselure en tenant lieu et une lame mobile.

Dans le chenal-guide de ces machines connues se trouve une butée dont la distance par rapport à la cisaille détermine la longueur du fil à couper, le fil étant poussé contre la butée par un dispositif d'entraînement situé en amont de la cisaille.

En touchant la butée, le fil provoque par un dispositif mécanique, électrique ou autre, la mise en fonctionnement de la cisaille et le sectionnement du fil.

Le fond du chenal-guide est éclipsable et s'ouvre à chaque coupe de la cisaille de manière à permettre, par gravité, l'évacuation du tronçon de fil coupé.

Dans les dispositifs actuellement connus, l'ordre des opérations est le suivant:

La source de fil métallique débite du fil qui traverse habituellement des organes dresseurs et qui, ensuite, sous l'action d'un ou de plusieurs dispositifs d'entraînement convenables, passe à travers la cisaille ouverte ; la partie du fil qui à passé au-delà de la cisaille pénètre dans le chenal-guide, à peu près suivant l'axe central du chenal et rencontre la butée qui se trouve dans celui-ci. Cette rencontre provoque, par un mécanisme approprié, le mouvement de la lame mobile de la cisaille, qui coupe le fil, et à la fin de cette opération, un mécanisme de synchronisation qui commande les mouvements de certaines parties de la machine fait que le fond du chenal se dérobe. Le tronçon de fil qui se trouvait dans le chenal tombe alors à l'extérieur en dégageant la place nécessaire pour l'entrée dans le chenal d'une nouvelle longueur de fil.

On peut accélérer les opérations en agissant sur les différentes phases du processus qui vient d'être décrit, notamment en augmentant la vitesse de fonctionnement de la cisaille. Toutefois, l'expérience a montré que l'opération qui demande le temps le plus long est le dégagement, par le fil coupé, de la place qu'il occupait dans le chenal.

Il peut donc arriver que le fil qui vient remplacer le tronçon coupé entre en contact avec l'extrémité, côté cisaille, de ce tronçon et exerce sur lui une pression. Ce faisant, il perturbe la chute du tronçon coupé et peut provoquer des déformations, aussi bien au niveau du fil coupé qu'au niveau du fil qui avance. La déformation du fil qui avance peut au surplus provoquer l'échappement du fil du chenal avant que celui-ci se referme dans sa partie inférieure. La présente invention remédie aux inconvénients précités. Elle permet d'augmenter considérablement la cadence de travail et la fiabilité de la machine.

L'invention repose sur l'idée d'introduire le fil à couper dans la rainure du chenal alors que le tronçon précédemment coupé s'y trouve encore.

Le chenal-guide suivant l'invention, du type décrit dans le premier paragraphe du présent mémoire, est essentiellement caractérisé en ce que le fond éclipsable de la rainure longitudinale du chenal-guide est situé à un niveau inférieur à celui du bord inférieur de la lame fixe de la cisaille, la différence entre ces niveaux étant telle qu'une portion de fil métallique à couper en baguettes puisse pénétrer dans la rainure longitudinale, alors qu'une baguette qui vient d'être découpée repose encore sur le fond de la rainure longitudinale.

Deux portions de fil pourront ainsi trouver place simultanément dans la rainure, l'un, le plus voisin du fond de la rainure, étant le tronçon coupé, tandis que l'autre, pénétrant dans la rainure au-dessus de lui, s'y avance déjà pendant que le fond de la rainure s'éclipse. On gagne beaucoup de temps par ce recouvrement partiel de deux phases du processus et en même temps on évite que le fil entrant ne vienne buter contre l'extrémité du tronçon coupé alors que ce dernier est encore dans la rainure - avec tous les inconvénients qui en résulteraient.

Dans une forme de réalisation du chenal-guide suivant l'invention, dans lequel, de manière connue, la rainure est couverte à sa partie supérieure au moins partiellement par un toit éventuellement ajouré et la face inférieure de ce toit est, à l'extrémité amont ou entrée de la rainure, à un niveau légèrement supérieur au niveau de la surface supérieure du fil injecté dans le chenal-guide, ce chenal-guide est caractérisé en ce que la face inférieure du toit se rapproche sur une partie de sa longueur du fond de la rainure et s'étend, au voisinage de l'extrémité aval de la rainure, à une distance du fond de cette rainure légèrement supérieure au diamètre du fil.

En définitive, l'arrêt de l'avance du fil à couper peut être strictement limité au temps pendant lequel la lame mobile de la cisaille obstrue le passage du fil.

D'autres détails de l'invention apparaîtront dans la description suivante, dans laquelle il est fait référence aux dessins ci-annexés.

Ces dessins représentent un exemple de forme de réalisation de l'invention.

On y voit, en

- figure 1, une coupe longitudinale axiale du chenal;

- figure 2, une vue en bout du chenal, suivant les flèches II-II de la figure 1;

- figure 3, un schéma montrant la succession dans le temps des différentes phases de l'opération.

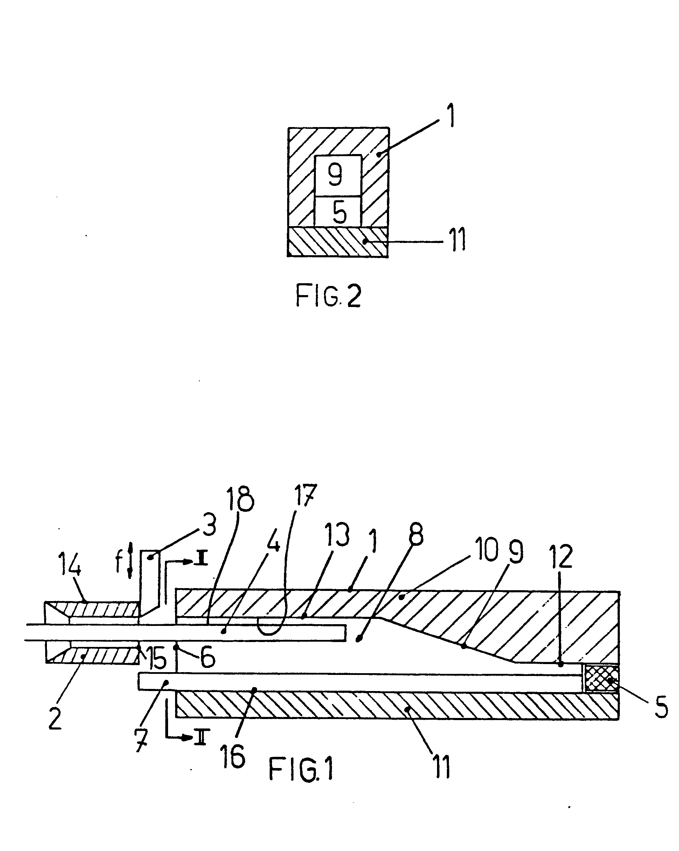

Sur la figure 1, on a désigné par 1 le chenal-guide et par 2 la cisaille. Le chenal-guide comporte essentiellement un passage ou rainure longitudinale 8 limitée à sa partie inférieure par un fond 11 et à sa partie supérieure par un toit 10, qui peut être discontinu ou ajouré et peut ne s'étendre que sur une partie de la longueur de la rainure 8.

Le fond 11 est susceptible de se dérober ou s'éclipser sous l'action d'un mécanisme (non représenté), suivant une disposition connue en soi, par exemple par pivotement autour d'un axe longitudinal.

Le toit 10 présente intérieurement un profil comprenant trois parties: une partie 13 rectiligne faisant suite à l'entrée 6 du chenal;

une partie 9 inclinée vers le bas et une partie 12 relativement proche du fond 11 assurant toutes deux un guidage correct du fil. A l'extrémité aval du chenal se trouve une butée 5 dont la position est réglable.

La cisaille indiquée dans son ensemble par 2 comprend une buselure 14, formant lame fixe, terminée du côté le plus voisin de l'entrée 6 du chenal par un bord 15, et une lame mobile 3 susceptible de prendre un mouvement alternatif de montée et de descente suivant la flèche double f.

La face supérieure 16 du fond 11 de la rainure 8 est située à un niveau sensiblement inférieur à celui de l'arête du bord 15 de la buselure fixe 14 de la cisaille.

Comme on le voit à la figure 1, le niveau de la face supérieure du fond 11 de la rainure longitudinale 8 est situé sensiblement en-dessous du niveau auquel la baguette 4 de fil à couper par la cisaille 2 est injectée dans l'extrémité amont ou entrée 6 du chenal-guide 1, la différence entre ces deux niveaux étant au moins égale à une fois, voire même deux fois, le diamètre du fil. Quant au toit 10 de la rainure 8, sa face inférieure 17 s'étend, à l'extrémité d'amont ou entrée 6 de la rainure 8, à un niveau légèrement supérieur au niveau de la surface supérieure 18 du fil injecté dans le chenal-guide 1.

On voit que la hauteur de la rainure 8, dans sa partie la plus proche de l'entrée, c'est-à-dire de l'extrémité amont 6 du chenal, est suffisante pour laisser place à deux portions de fil 4 et 7, l'une se situant au-dessus de l'autre.

On a désigné par 4 une portion de fil métallique qui a traversé la cisaille ouverte et qui s'engage dans la rainure 8, tandis que 7 désigne un tronçon de fil déjà coupé et qui repose sur le fond 11 de la rainure.

Comme le révèle aussi la figure 1, la face inférieure 17 du toit 10 de la rainure longitudinale 8 du chenal-guide s'étend, à l'extrémité amont ou entrée 6 de cette rainure 8, à un niveau légèrement supérieur au niveau de la surface supérieure 18 du fil 4 injecté dans le chenal-guide 1.

Lorsque le fil 4 avance dans la rainure 8, son extrémité avant, guidée par le plan incliné 9, s'engage dans le passage où se trouve placée la butée 5 et vient buter contre celle-ci. La position de cette butée 5, c'est-à-dire sa distance au bord libre 15 de la buselure 14 de la cisaille 2, détermine la longueur des tronçons de fil coupé, ou longueur des baguettes à obtenir.

Le fait que le fil arrive en contact avec la butée 5 provoque, par un mécanisme connu en soi et non représenté, le mouvement de la lame mobile 3 de la cisaille 2 et l'éclipsage du fond 11 du chenal-guide 1.

On voit que le dispositif décrit ne diffère des dispositifs connus antérieurement que par la forme de la rainure 8 et par les dimensions de celle-ci qui permettent son occupation, à son entrée, par deux portions de fil simultanément.

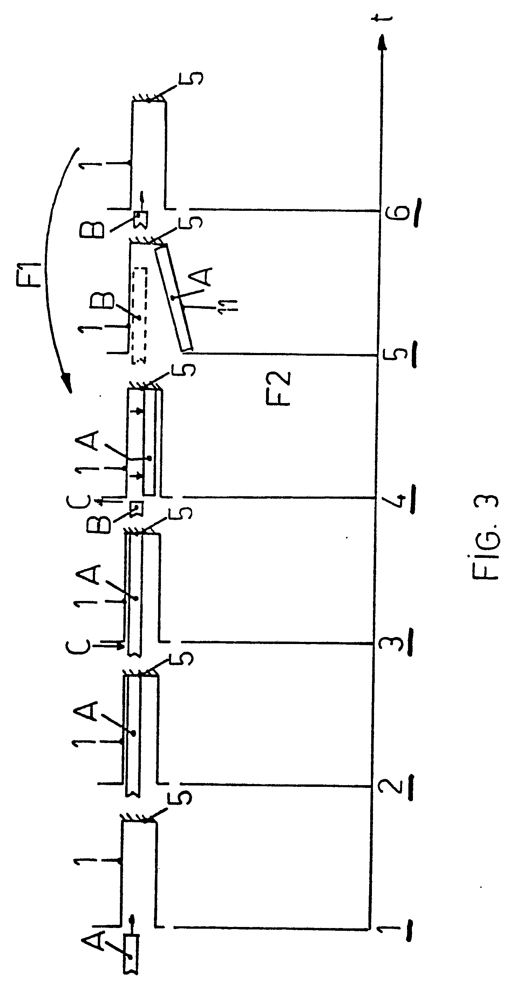

La figure 3 montre comment se succèdent dans le temps les différentes phases d'une opération de coupe classique. Les instants repérés sur l'axe t par 1, 2, 3, etc... sont simplement indiqués dans l'ordre de leur succession et les distances entre les points 1, 2, 3, etc... ne sont pas proportionnelles aux intervalles de temps réels:

A l'instant 1, l'extrémité avant d'un fil A se trouve à l'entrée 6 du chenal 1.

A l'instant 2, le fil A touche la butée 5 du chenal.

A l'instant 3, le mécanisme de commande de la cisaille C détermine la descente de la lame mobile de cette cisaille. Le fil est alors coupé.

A l'instant 4, la lame mobile de la cisaille C remonte, laissant ainsi ouvert un passage pour l'avancement d'une nouvelle portion de fil B. A ce moment, le tronçon coupé A est déjà tombé sur le fond 11 du chenal sous l'action de la lame mobile de la cisaille et de la gravité.

A l'instant 5 , le fond 11 du chenal se dérobe en permettant au tronçon coupé A de tomber hors du chenal.

A l'instant 6, la portion B suivante du fil se présente à l'entrée 6 du chenal pour recommencer un nouveau cycle de fonctionnement.

Suivant l'invention, la disposition relative du fond du chenal et du bord 15 de la buselure fixe de la cisaille est telle qu'il est possible de reporter l'instant 6 avant l'instant 5, si bien qu'à l'instant 5, une partie de la portion B du fil à couper (représentée en pointillés) a déjà pénétré dans le chenal au-dessus du tronçon A qui est en train de tomber. L'économie de temps ainsi réalisée est symbolisée par la flèche F1.

## Revendications

1. Chenal-guide (1) présentant une rainure longitudinale (8) à fond éclipsable (11) et constituant un élément d'une machine destinée à découper des baguettes (4, 7) de fil métallique de longueur prédéterminée et précise, à partir d'une source débitant du fil dressé ou droit, ce chenal-guide étant placé en aval d'une cisaille (2) constituée d'une lame fixe (14) et d'une lame mobile (3) et présentant à son extrémité aval une butée (5), dont la distance par rapport à la cisaille avant et au début de l'action de cette cisaille détermine la longueur des baguettes, caractérisé en ce que le fond éclipsable (11) de la rainure longitudinale (8) du chenal-guide (1) est situé à un niveau inférieur à celui du bord inférieur (15) de la lame fixe (14) de la cisaille (2), la différence entre ces niveaux étant telle qu'une portion de fil métallique (4) à couper en baguettes puisse pénétrer dans la rainure longitudinale (8) alors qu'une baguette (7) qui vient d'être découpée repose encore sur le fond (11) de la rainure longitudinale (8).

2. Chenal-guide suivant la revendication 1, dans lequel la rainure précitée est couverte à sa partie supérieure au moins partiellement par un toit (10) éventuellement ajouré, et dans lequel la face inférieure (17) de ce toit est, à l'extrémité amont ou entrée de la rainure, à un niveau légèrement supérieur au niveau de la surface supérieure du fil injecté dans le chenal-guide, caractérisé en ce que la face inférieure (17) du toit (10) se rapproche sur une partie (9) de sa longueur du fond (11) de la rainure (8) et s'étend, au voisinage de l'extrémité aval de la rainure (8), à une distance du fond (11) de cette rainure (8) légèrement supérieure au diamètre du fil (4, 7).

## Patentansprüche

1. Führungskanal (1), der eine Längsnut (8) mit wegklappbarem Boden (11) aufweist und ein Element einer Ablängmaschine für Stäbe (4, 7) aus metallischem Draht von vorbestimmter und genauer Länge, gerechnet ab einer gerichteten oder geraden Draht ausgebenden Quelle, bildet, wobei dieser Führungskanal in Arbeitsrichtung nach einer von einem feststehenden Messer (14) und einem beweglichen Messer (3) gebildeten Schere (2) angeordnet ist und an seinem in Arbeitsrichtung vorderen Ende einen Anschlag (5) aufweist, dessen Abstand von der Schere vor und bei Beginn von deren Arbeitsbewegung die Länge der Stäbe bestimmt, dadurch gekennzeichnet, daß der wegklappbare Boden (11) der Längsnut (8) vom Führungskanal (1) auf einer geringeren Höhe als der untere Rand (15) vom feststehenden Messer (14) der Schere (2) angeordnet ist, wobei diese Höhendifferenz so ist, daß ein Abschnitt des in Stäbe abzulängenden metallischen Drahtes (4) in die Längsnut (8) eindringen kann, während ein zuvor abgelängter Stab (7) noch auf dem Boden (11) der Längsnut (8) aufruht.

2. Führungskanal nach Anspruch 1, bei dem die genannte Nut oben wenigstens zum Teil mit einem eventuell durchbrochenen Dach (10) abgedeckt ist und die Unterseite (17) dieses Dachs am in Arbeitsrichtung hinteren oder einlaufseitigen Ende der Nut auf einer etwas größeren Höhe als die Oberseite des in den Führungskanal eingeschossenen Drahtes angeordnet ist, dadurch gekennzeichnet, daß sich die Unterseite (17) des Dachs (10) auf einem Abschnitt (9) ihrer Länge dem Boden (11) der Nut (8) nähert und sich in der Nachbarschaft des in Arbeitsrichtung vorderen Endes der Nut (8) in einem Abstand vom Boden (11) dieser Nut (8) erstreckt, der etwas größer als der Durchmesser des Drahtes (4, 7) ist.

## Claims

1. Guide channel (1) having a longitudinal groove (8) with a retractable bottom (11) and forming a component of a machine intended to cut rods (4, 7) of metal wire of a predetermined and precise length, from a supply of straightened or straight wire, this guide channel being located downstream of a shears (2) consisting of a fixed blade (14) and a movable blade (3) and having at its downstream end a stop (5), the distance of which relative to the shears determines the length of the rods before and at the start of operation of these shears, characterized in that the retractable bottom (11) of the longitudinal groove (8) of the guide channel (1) is located at a lower level than that of the bottom edge (15) of the fixed blade (14) of the shears (2), the difference between these levels being such that a portion of metal wire (4) to be cut into rods is able to penetrate into the longitudinal groove (8) while a rod (7) which has just been cut still rests on the bottom (11) of the longitudinal groove (8).

2. Guide channel according to Claim 1, in which the top part of the abovementioned groove is covered at least partially by a cover-piece (18) which may be perforated, and in which the bottom side (17) of this cover-piece is, at the upstream end or entrance of the groove, at a slightly higher level than the level of the upper surface of the wire injected into the guide channel, characterized in that the bottom side (17) of the cover-piece (10) is tapered, over a part (9) of its length, towards the bottom (11) of the groove (8) and extends, in the vicinity of the downstream end of the groove (8), at a distance from the bottom (11) of this groove (8) slightly greater than the diameter of the wire (4, 7).

FIG. 2

FIG. 1

FIG. 3

EP 0 143 771 B1